(19) **Europäisches Patentamt**
**European Patent Office**
**Office européen des brevets**

(11) Veröffentlichungsnummer : **0 101 523**
**B1**

(12) **EUROPÄISCHE PATENTSCHRIFT**

(45) Veröffentlichungstag der Patentschrift :
**16.04.86**

(51) Int. Cl.⁴ : **B 29 C 45/82**

(21) Anmeldenummer : **82107565.2**

(22) Anmeldetag : **19.08.82**

---

(54) **Druckbegrenzungsanordnung.**

---

(43) Veröffentlichungstag der Anmeldung :
**29.02.84 Patentblatt 84/09**

(45) Bekanntmachung des Hinweises auf die Patenterteilung : **16.04.86 Patentblatt 86/16**

(84) Benannte Vertragsstaaten :
**DE FR GB IT SE**

(56) Entgegenhaltungen :
**DE-A- 1 550 063**
**DE-A- 2 030 108**
**DE-A- 2 419 975**
**DE-A- 2 544 681**
**DE-A- 2 544 682**
**DE-A- 3 013 426**
**FR-A- 2 467 431**
**FR-A- 2 472 969**
**US-A- 2 991 802**
**ÖLYDRAULIK UND PNEUMATIK, Band 23, Nr. 3, März 1979, Mainz H. BLÜML "Hydraulische Steuerungen moderner Spritzgiessmaschinen, Seiten 175-182**
**ÖLHYDRAULIK UND PNEUMATIK, Band 26, Nr. 4, April 1982, Mainz B. STILLHARD et al. "Hydraulik an Spritzgiemaschinen", Seiten 290-300**
**HYDRAULICS & PNEUMATICS, Band 7, Juli 1980, Cleveland, Ohio, USA F.A. ROSE "Multi pressures control injection molding press", Seiten 93-96**

(73) Patentinhaber : **Vickers Systems GmbH**
**Frölingstrasse 41**
**D-6380 Bad Homburg (DE)**

(72) Erfinder : **Siegrist, Ronald**
**Schlattwiesenstrasse 8**
**CH-9242 Oberuzwil (CH)**

(74) Vertreter : **Blumbach Weser Bergen Kramer Zwirner Hoffmann Patentanwälte**
**Sonnenbergerstrasse 43**
**D-6200 Wiesbaden 1 (DE)**

---

## Beschreibung

Die Erfindung bezieht sich auf eine Druckbegrenzungsanordnung nach dem Oberbegriff des Anspruches 1.

Bei einer bekannten Druckbegrenzungsanordnung dieser Art (DE-A-2 419 975) ist ein Druckbegrenzungsventil mit einem Steuerraum vorgesehen, der gleichzeitig mit einem Drucksteuerventil und einem Wegeventil verbunden ist, welches den Steuerraum des Druckbegrenzungsventils entweder mit Pumpendruck oder mit Tankdruck versorgt. Im letzteren Fall wird der Staudruckbereich einer Spritzgießmaschine eingestellt, der bei etwa 5 bis 10 bar liegt. Wenn das Wegeventil dem Steuerraum des Druckbegrenzungsventils Druck zuführt, kann dieser durch das Drucksteuerventil modifiziert werden, indem ein Ablauf zum Tank mehr oder weniger weit geöffnet wird. Im Falle der Einstellung des Staudruckbereiches wirkt das Wegeventil offenbar als Ablaufdrossel, wobei der Staudruck nur ungenau und nur bei zurückweichendem Kolben der Spritzgießmaschine erzeugt werden kann.

Die Erfindung löst die Aufgabe, eine Druckbegrenzungsanordnung für wenigstens zwei Druckbereiche zu schaffen, die für sich genommen ausreichend schmal sind, so daß mit einer genauen Einstellung des Ansprechsdrucks der Druckbegrenzungsanordnung gerechnet werden kann.

Die gestellte Aufgabe wird aufgrund der Kombination der im kennzeichnenden Teil des Anspruchs 1 genannten Maßnahmen gelöst. Die Unteransprüche geben Ausgestaltungen und Weiterbildungen der Erfindung wieder.

Ausführungsbeispiele werden anhand der Zeichnung beschrieben. Dabei zeigt :

Figur 1   ein erstes Anwendungsbeispiel und

Figur 2   eine geänderte Einzelheit der Druckbegrenzungsanordnung.

Eine Hauptpumpe 1 liefert einen Hydraulikstrom in eine Hauptleitung 2, die zu einem Kolbenraum 3 einer Spritzgießmaschine 4 führt. Von der Leitung 2 führt eine Stichleitung 5 zu einem Druckbegrenzungsventil 10, welches einen Hauptkolben 11 aufweist und die Verbindung zu einer Tankleitung 6 sperrt oder freigibt. Der Hauptkolben 11 weist eine erste Kolbenseite 12, die mit dem zu überwachenden Druck in der Leitung 2, 5 in Verbindung steht, und eine zweite Kolbenseite 13 auf, die in einer Steuerkammer 14 angeordnet ist. Im Hauptkolben 11 ist ein Federsitzraum 15 vorgesehen, dem ein Deckel 16 zugeordnet ist. Zwischen dem Boden des Federsitzraumes 15 und dem Deckel 16 ist eine Ventilfeder 15a angeordnet. An der Rückseite des Deckels 16 stützt sich ein Hilfskolben 17 ab, der eine Druckbeaufschlagungsfläche 18 in einem Zylinderraum 19 aufweist.

Ein Umschaltventil 20 ist zur Schaltung von vier Wegen oder Leitungen 21, 22, 23, 24 vorgesehen, wobei die Leitung 21 in den Raum 14, die Leitung 22 in den Raum 19, die Leitung 23 zum Tank 8 und die Leitung 24 zu einer Steuerdruckquelle 25 führt.

Die Steuerdruckquelle 25 enthält eine Pumpe 26, eine einstellbare oder steuerbare Drossel 27 und ein elektrisch einstellbares Vorsteuerventil 28, welches über eine Ablaufleitung 29 mit dem drucklosen Tank 8 verbunden ist. Die von der Pumpe 26 geförderte Hydraulikflüssigkeit fließt über den hydraulischen Ablaufkreis 27, 28, 29 ab, wobei sich im Bereich der Leitung 24 ein bestimmter Druck einstellt, der von der elektrischen Einstellung des Ansprechwertes des Vorsteuerventils 28 abhängt und somit steuerbar ist. Der Steuerdruck wird je nach dem Schaltzustand des Umschaltventils 20 in den Raum 19 oder 14 geschaltet. Die Druckbeaufschlagungsflächen 18 bzw. 13 sind unterschiedlich groß, so daß die Kraft, mit welcher der Hauptkolben 11 an seinen Ventilsitz bei 7 gepreßt wird, unterschiedlich groß ist, je nachdem, welcher der Räume 19 oder 14 mit Steuerdruck beaufschlagt ist. Während die Fläche 13 die gleiche Größenordnung wie die Fläche 12 aufweist (im vorliegenden Fall ist die Fläche 13 ein wenig größer als die Fläche 12), unterscheidet sich das Flächenverhältnis der Druckbeaufschlagungsfläche 18 zur Kolbenseite 12 um einen Multiplikationsfaktor, der stark von Eins abweicht. Demgemäß kann man den Steuerdruck zu unterschiedlichen Bereichen der Haltekraft des Druckbegrenzungsventils 10 und damit von dessen Ansprechdruck verwenden. Wenn der Steuerdruck in den Steuerraum 19 geleitet wird, steht ein genau einzustellender Druckbereich von 1 bis 50 bar zur Verfügung, und wenn der Steuerdruck in den Steuerraum 14 gelangt, kann man den Ansprechdruck im Bereich 100 bis 250 bar genau einstellen. Im Falle einer Spritzgießmaschine decken diese Bereiche die Solldruckbereiche für den Staudruck und den Spritzdruck ab.

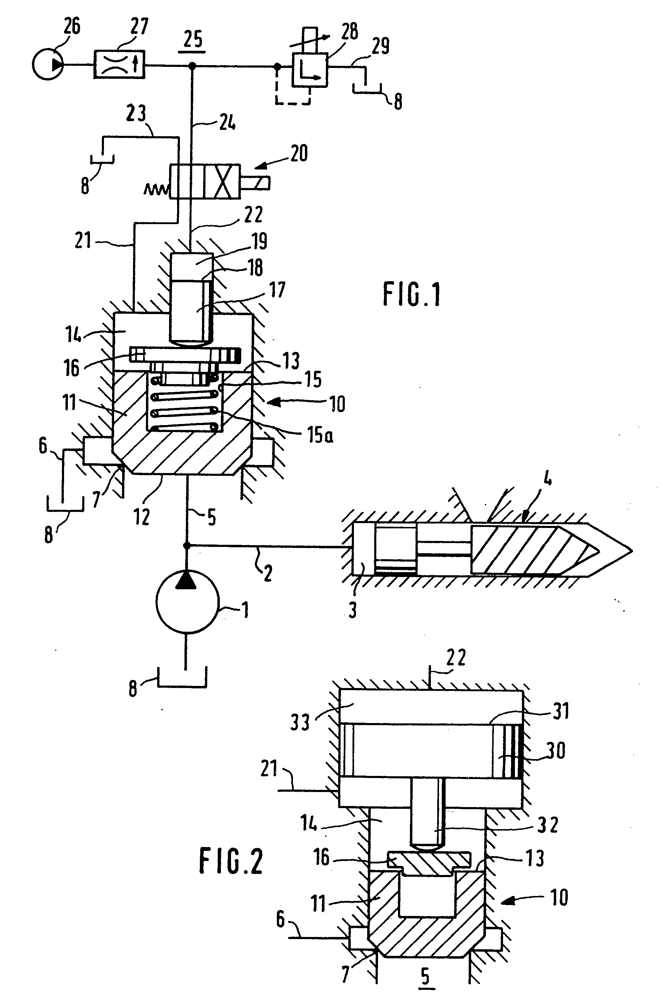

Figur 2 zeigt eine Variante mit Signalverstärkung. Es ist ein Hilfskolben 30 mit einer Druckbeaufschlagungsfläche 31 vorgesehen, die wesentlich größer als die zweite Kolbenseite 13 des Hauptkolbens 11 ist. Der Hilfskolben 30 umfaßt einen Stößel 32, der auf dem Deckel 16 aufsitzt und somit die mechanische Verbindung zum Hauptkolben 11 herstellt.

Die dargestellte Variante nach Fig. 2 ermöglicht es, mit einem geringeren Druck der Steuerdruckquelle 25 auszukommen. Wenn der Hilfskolben 30 belastet wird, wird der höhere Druckbereich eingestellt, und wenn der Steuerraum 14 beaufschlagt wird, wird der niedrigere Druckbereich eingestellt.

Es ist im übrigen auch möglich, den Hilfskolben 17 auf den Hilfskolben 30 einwirken zu lassen. In diesem Fall kann man noch weiter auseinanderliegende Druckbereiche erhalten, in denen eine genaue Einstellung der Druckbegrenzung möglich ist. Auf diese Weise lassen sich auch mehr als zwei Druckbereiche gewinnen, in denen die genaue Einstellung des Ansprechdrucks mit der Druckbegrenzungsanordnung möglich ist. Es braucht lediglich das Umschaltventil 20 dementsprechend sechs Wege und drei Schaltstellungen zu umfassen.

Die Steuerdruckquelle 25 kann, statt von einer Pumpe 26 betrieben zu werden, auch einen Speicher mit Druckminderventil umfassen.

Die Erfindung kann in der Praxis auch dazu verwendet werden, in einem gegebenen hydraulischen System nur eine bestimmte Bauart des Druckbegrenzungsventils einzusetzen, obzwar man unterschiedlich große Ansprechdruckbereiche in unterschiedlichen Stellen des Systems einzustellen hat. Neben einem « normal » ausgebildeten Druckbegrenzungsventil (ohne Hilfskolben) wird dann ein baugleiches, jedoch mit Hilfskolben 17 oder 30 verwendet, wobei die Umschaltung zwischen dem normalen Druckbegrenzungsventil und dem Steuerraum 19 bzw. 33 des Hilfskolbens 17 bzw. 30 zu erfolgen hat.

## Patentansprüche

1. Druckbegrenzungsanordnung für wenigstens zwei Druckbereiche, insbesondere den Spritzdruckbereich und den Staudruckbereich in Spritzgießmaschinen mit folgenden Merkmalen :

a) ein Druckbegrenzungsventil (10) weist einen Hauptkolben (11) auf, dessen erste Kolbenseite (12) dem zu überwachenden Druck und dessen zweite Kolbenseite (13) einem Steuerdruck bzw. dem Tankdruck sowie gegebenenfalls der Kraft einer Ventilfeder (15a) unterliegt, wobei durch Variation des Steuerdrucks der Ansprechdruck eingestellt werden kann ;
gekennzeichnet durch folgende Maßnahmen :

b) auf den Hauptkolben (11) wirkt ein Hilfskolben (17 ; 30) mit einer Druckbeaufschlagungsfläche (18 ; 31) ein, die um einen Multiplikationsfaktor kleiner oder größer ist als die erste Kolbenfläche (12) des Hauptkolbens (11) ;

c) der Steuerdruck ist von der zweiten Kolbenseite (13) des Hauptkolbens (11) auf die Druckbeaufschlagungsfläche (18 ; 31) des Hilfskolbens (17 ; 30) — und umgekehrt — umschaltbar, wobei die Umschaltung zwischen dem ersten und zweiten Druckbereich erfolgt.

2. Druckbegrenzungsanordnung nach Anspruch 1, dadurch gekennzeichnet, daß eine Steuerdruckquelle (25) durch eine einstellbare oder steuerbare Drossel (27) und ein steuerbares Vorsteuerventil (28) geschaffen ist, die an einem hydraulischen Ablaufkreis (29) angeordnet sind.

3. Druckbegrenzungsanordnung nach Anspruch 1 oder 2, wobei der Hauptkolben (11) einen Federsitzraum (15) aufweist, dadurch gekennzeichnet, daß ein auf dem Federsitzraum (15) passender Deckel (16) vorgesehen ist, an welchem der Hilfskolben (17 ; 30) angreift.

## Claims

1. Pressure-limiting arrangement for two or more pressure ranges, in particular the injection-pressure range and the filling-pressure range in injection moulding machines, this arrangement exhibiting the following features :

a) a pressure-limiting valve (10) possesses a master piston (11), the first face (12) of this piston (11) being subjected to the pressure which is to be monitored, and its second face (13) being subjected to a control pressure, or to the reservoir pressure, as the case may be, as well as, under certain circumstances, to the force of a valve spring (15a), it being possible, by varying the control pressure, to set the pressure at which response occurs ;
characterized by the following measures :

b) an auxiliary piston (17 ; 30) acts on the master piston (11), this auxiliary piston (17 ; 30) presenting an area (18 ; 31) to which pressure can be applied, this area (18 ; 31) being smaller or larger, by a multiplication factor, than the area (12) of the first face (12) of the master piston (11) ;

c) by performing a switching-over operation, the control pressure can be transferred, from the second face (13) of the master piston (11), to the auxiliary-piston area (18 ; 31) to which pressure can be applied — and vice versa — the switching-over operation being performed between the first and second pressure ranges.

2. Pressure-limiting arrangement according to Claim 1, characterized in that a source (25) of control pressure is provided by means of an adjustable or controllable flow restrictor (27) and a controllable pilot valve (28), which are installed on a hydraulic return circuit (29).

3. Pressure-limiting arrangement according to Claim 1 or 2, wherein the master piston (11) possesses a spring-seating space (15), characterized in that a cap (16) is provided, which fits on the spring-seating space (15) and on which the auxiliary piston (17 ; 30) acts.

## Revendications

1. Dispositif de limitation de la pression prévu pour au moins deux gammes de pressions, en particulier pour la gamme des pressions d'injection et la gamme des contrepressions dans les machines à mouler par injection, présentant les particularités suivantes :

a) une valve de limitation de la pression (10) présente un piston principal (11) dont la première face (12) subit l'action de la pression à contrôler et dont la deuxième face (13) subit l'action d'une pression de commande ou de la pression de la bâche, ainsi que, éventuellement, celle de la force d'un ressort de valve (15a), la pression de réponse pouvant être réglée par une variation de la pression de commande ;
caractérisé par les dispositions suivantes :

b) sur le piston principal (11) agit un piston auxiliaire (17 ; 30) qui présente une surface d'action de la pression (18 ; 31) qui est inférieure ou supérieure d'un certain facteur de multiplication à la première surface (12) du piston principal (11) ;

c) la pression de commande peut être commutée de la deuxième face (13) du piston principal (11) à la surface d'action de la pression (18 ; 31) du piston auxiliaire (17 ; 30) et inversement, la commutation se produisant alors entre la première et la deuxième des gammes de pressions.

2. Dispositif de limitation de la pression selon la revendication 1, caractérisé en ce qu'une source de pression de commande (25) est constituée par un étranglement réglable ou commandé (27) et par une valve de réglage commandée (28), ces éléments étant agencés dans un circuit de décharge hydraulique (29).

3. Dispositif de limitation de la pression selon la revendication 1 ou la revendication 2, dans lequel le piston principal (11) présente une chambre de portée de ressort (15), caractérisé en ce qu'il est prévu un couvercle (16) qui s'ajuste sur la chambre de portée de ressort (15) et qui est attaqué par le piston auxiliaire (17 ; 30).

FIG.1

FIG.2